# NEW EUROPEAN PATENT SPECIFICATION

(11) **EP 3 622 824 B2**
(45) Date of publication and mention of the opposition decision: **26.03.2025**
(45) Mention of the grant of the patent: 16.11.2022
(21) Application number: 18194106.3
(22) Date of filing: 12.09.2018
(51) Int. Cl.: A21C 9/04, B07B 1/20, B07B 13/16, A21C 15/00

(54) **SIFTER FOR SPRINKLING MATERIAL**
SIEB FÜR BERIESELUNGSMATERIAL
TAMIS POUR MATÉRIAU D'ASPERSION

(43) Date of publication of application: 18.03.2020
(73) Proprietor: Radie B.V., 4104 BC Culemborg (NL)
(72) Inventor: VAN BLOKLAND, Johannes Josephus Antonius, 1251 BG Laren (NL)
(74) Representative: IP Maison

(56) References cited:
- EP-A1- 3 453 258
- DE-A1- 102014 201 525
- DE-A1- 4 413 673
- US-A- 4 044 714
- US-B1- 6 332 739

## Description

The present invention relates to a sifter for sprinkling material, in particular a sifter for flour or seeds for use in an industrial dough line.

Sifter for sprinkling materials are well known in the art, and serve to provide flour or seeds or the like onto a dough sheet, separate dough product, or dough conveyor before dough is applied. Flour may serve to avoid sticking of the dough onto the conveyor, or separate parts of the dough onto each other. Seeds may be added for their specific taste or as a decoration material. Automated dough lines may comprise one or more of these units, that normally comprise a reservoir for the sprinkling material, for delivering sprinkling material to a sifter body with dispensing openings for the sprinkling material, and a transporter, for transporting the sprinkling material from the reservoir to the sifter body and/or through the sifter body. The sprinkling material may then fall from the openings onto a substrate such as a conveyor belt with a dough sheet or separate dough products on it, or a conveyor on which these products are to be placed. The reservoir may be on top of the sifter body, so that gravity helps the sprinkling material to flow to the sifter body and also to reach the openings. The transporter may be a screw conveyor, that helps the sprinkling material to travel from the reservoir to the openings and also to pass through the latter. The sifter body normally is an elongate body that extends from one side of a conveyor belt to the other, perpendicular to the direction of conveyance, so that the entire width of the conveyor belt or products laying thereon can be provided with sprinkling material.

The US patent US 6 332 739 discloses a sifter for sprinkling material ,in accordance with the preamble of claim 1, that has two screw conveyors, fitted together in a single channel.

The US patent US 4 044 714 discloses a food product coating apparatus that may disclose features of independent claims of the present invention in another context.

The European patent application EP 3 453 258 discloses a sifter for sprinkling material that has two channels for flour on top of each other.

The sifters for sprinkling materials according to the art have several disadvantages.

A first disadvantage is that the sprinkling material does not always equally spread over the width of the conveyor belt. Sprinkling material tends to clog and to close the dispensing openings and to stick onto the walls of the sifter body.

A second disadvantage is that the reservoir on top of the sifter body may be hard to reach for filling, in particular when the sifter for sprinkling material is intended for a broad conveyor belt. Tools may be used, but there is an increased risk of spilling sprinkling material besides the reservoir and directly onto the conveyor.

Besides that, automatic fillers exist according to the state of the art, but these tend to increase the height of the overall apparatus in such a way that configurations where conveyors are arranged on top of each other are hindered.

In particular, the height of the sifter for sprinkling material is determined by the reservoir, and becomes larger than desired in certain circumstances, in particular when the conveyor on which the sifter for sprinkling material is to be placed is positioned underneath another conveyor.

It is a goal of the present invention to take away at least some of the above mentioned disadvantages and/or to provide a useful alternative to the state of the art.

The invention thereto proposes a sifter for sprinkling material according to claim 1.

The looped channel through which sprinkling material can be circulated offers the advantage that sprinkling material is always moving through the sifter body and does not tend to accumulate in edges of the sifter body or in front of the at least one dispensing opening. Additionally, better distribution of the sprinkling material over the dispensing opening in its direction perpendicular to a direction in which dough is transported is obtained by the continuous flow of the sprinkling material. Flow rates may be higher than dispensing rates, so that the entire sifter body is always filled. This takes away the disadvantage that sprinkling material does not reach parts of the dispensing opening that are the furthest away from a connection between a reservoir and the sifter body.

In the present invention, the looped channel comprises two parallel channels, connected by U-turns at their ends. The channels are arranged directly next to each other and the U-turns formed by an opening between the two channels through which sprinkling material can travel. The channels may be elongate and extend over a distance that corresponds at least to the width of the dough conveyor.

The transporter comprises a pair of open helix shaped conveyors, arranged in the channels. Smaller sizes, such as flour, are transported with an open, helix shaped transporter, to avoid compression and clogging. These conveyors are arranged to turn in opposite direction during use, so that sprinkling material is actually circulated.

The sifter for sprinkling material according to the invention may further comprise a roller, arranged under the at least one dispensing opening, for delivering the sprinkling material to dough pieces or a dough sheet on an under laying conveyor belt, or to the conveyor belt itself. Such roller makes that the sprinkling material is more evenly distributed.

The dispensing opening may be provided with valves, that serve to close or open the openings. By operating the valves, various patterns may be obtained, smaller or broader lanes, or the number of lanes can be varied for instance. In a further embodiment, the sifter for sprinkling material according to the invention comprises multiple dispensing openings, which may be a number up to the number of valves, so that each valve opens or closes one opening.

These valves may comprise movable switches, comprising at least one opening, wherein the switches are movable between a position wherein the at least one opening is aligned with a dispensing opening in the dividing body, and a position wherein the opening is not aligned with a dispensing opening in the dividing body, and blocks the dispensing opening.

One specific aspect of the present invention is a switch of the above described type, having an arcuate shape, that follows the shape of a roller that is arranged below the switch. Such shape has the advantage that there is a constant height over which the sprinkling material falls onto the roller, which contributed to a well defined pattern of the material.

The disclosure also relates to a sifter for sprinkling material not being part of the invention with movable switches, with a single transporter and a single channel. This channel may be used unidirectional or bidirectional, that is, the transporter may be used in two directions. More precisely, the disclosure proposes a sifter for sprinkling material, comprising at least one reservoir for sprinkling material, a sifter body, comprising at least one dispensing opening for the sprinkling material, for transporting the sprinkling material from the reservoir to the sifter body, wherein the sifter for sprinkling material is provided with valves, wherein the valves comprise movable switches, comprising at least one opening, wherein the switches are placeable between a position wherein the at least one opening is aligned with the at least one dispensing opening in the dividing body, and a position wherein the opening is not aligned with the at least one dispensing opening in the dividing body, and blocks the dispensing opening. Optionally, this embodiment may be provided with a transporter.

In another embodiment, each valve comprises two openings, at a mutual distance that corresponds with a mutual distance between the openings of the looped channel of the sifter body, for opening or closing two openings simultaneously. These two openings provide sprinkling material at the same width location, so this configuration leads to a more even sprinkling material dispensing, and additionally allows to dispense higher volumes of sprinkling material at the same time, which allows for instance a higher dough speed below the sifter for sprinkling material.

In a further embodiment according to the present invention, the at least one reservoir is placed at an outmost position of the sifter body. The reservoir is then also outside a region of the body that comprises the dispensing openings. When the sifter for sprinkling material is arranged on top of a belt conveyor for dough, the reservoir is positioned besides the belt conveyor. Such configuration takes away the disadvantage that refilling the reservoir needs to take place above the conveyor belt, but it also enables to arrange a conveyor belt with a sifter for sprinkling material underneath another conveyor belt, for instance another conveyor belt from which dough pieces or a dough sheet are to be taken over.

In yet another embodiment of the present invention, the sifter for sprinkling material comprises a second reservoir. The second reservoir may be located at an opposite outmost position of the sifter body. Both reservoirs may in that case serve to provide sprinkling material to one of the transporters.

The invention will now be elucidated into more detail with reference to the following figures, wherein:
- Figure 1 shows a partially open view of a sifter for sprinkling material according to the invention;
- Figure 2 shows a first detail of a closed sifter for sprinkling material according to the invention; and
- Figure 3 shows a second detail of a closed sifter for sprinkling material according to the invention.

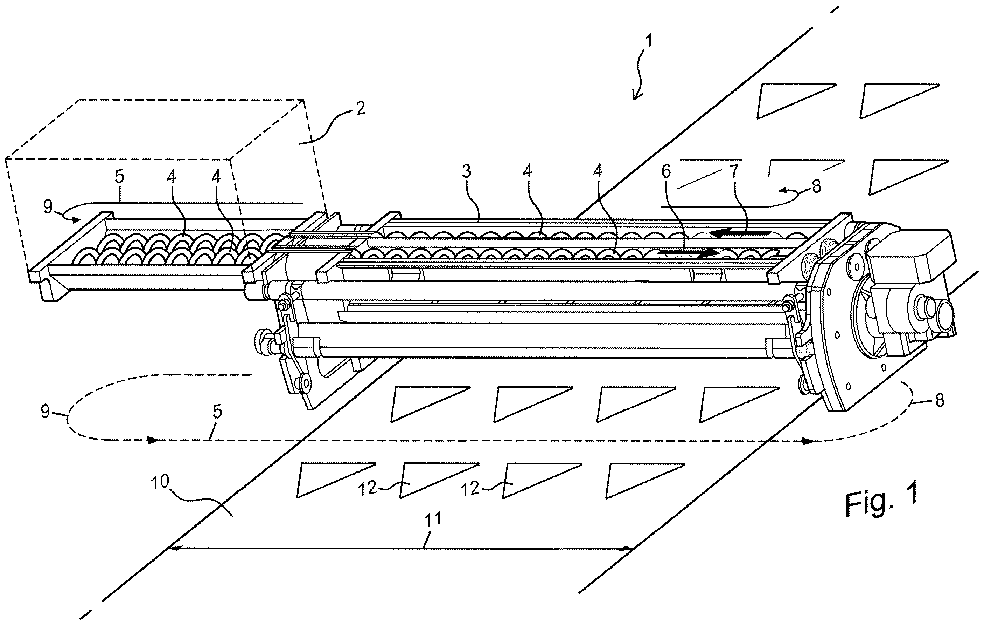

Figure 1 shows a partially open view of a sifter for sprinkling material 1 according to the invention, comprising a reservoir 2 for sprinkling material, a sifter body 3, comprising dispensing openings (not visible) for the sprinkling material, and a transporter 4, for transporting the sprinkling material from the reservoir to the sifter body 3 wherein the sifter body comprises a looped channel 5 along the dispensing openings. The looped channel comprises two parallel elongate channels 6, 7, connected by U-turns 8, 9 at their ends. The elongate channels 6, 7 extend over a length that is at least the width 11 of a belt conveyor 10 for dough pieces 12.

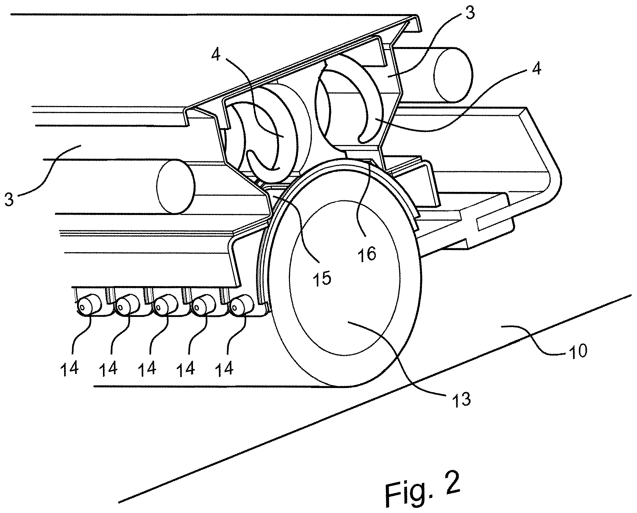

Figure 2 shows that the sifter for sprinkling material is further configured with a roller 13, arranged under the dispensing openings, for delivering the sprinkling material to dough on an underlaying belt conveyor 10. The dispensing openings are provided with valves 14. The valves comprise movable switches having at least one opening, movable between a position wherein the at least one opening is aligned with a dispensing opening 15, 16 in the dividing body, and a position wherein the opening is not aligned with a dispensing opening 15, 16 in the dividing body, and blocks the dispensing opening 15, 16.

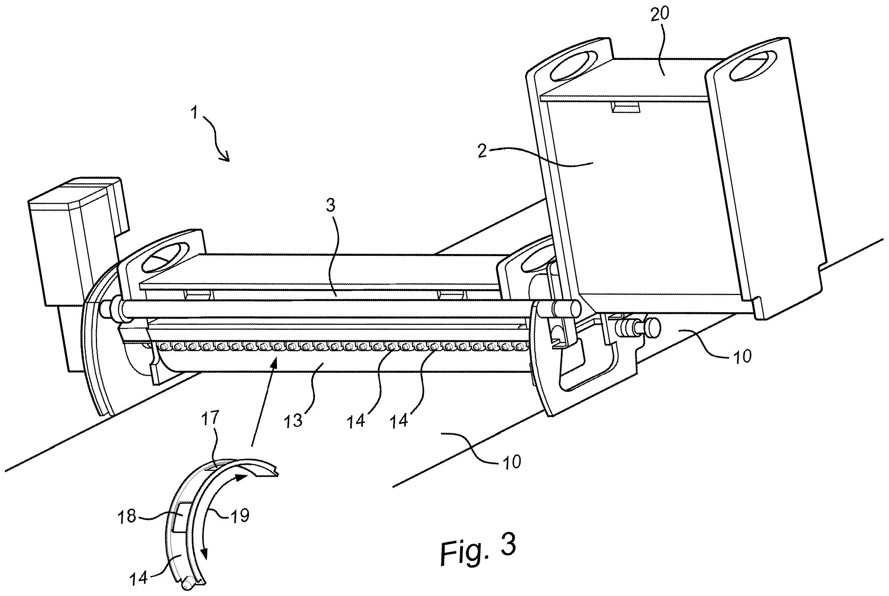

Figure 3 shows the sifter for sprinkling material 1 according to the invention, with one valve 14 taken out of the device. The valve 14 comprises two openings 17, 18 that can be aligned with dispensing openings 15, 16 at a mutual distance that corresponds with a mutual distance between the openings of the looped channel of the sifter body, for opening or closing two openings simultaneously in order to allow sprinkling material to be sifted. The valves 14 can be operated manually or by means of any type of actuator, by rotating them in the direction 19, when they are in position in the device 1. Figure 3 also clearly shows the reservoir 2, that is placed besides the region of belt 10, in order to easily allow refilling of reservoir 2 via lid 20.

The examples given are exemplary only and serve in no way to limit the scope of the invention, as defined by the following claims.

## Claims

1. Sifter for sprinkling material, comprising:
- At least one reservoir (2) for sprinkling material;
- a sifter body (3), comprising at least one dispensing opening (15,16) for the sprinkling material;
- a transporter (4), for transporting the sprinkling material from the at least one reservoir to the sifter body (3);
wherein
- the sifter body (3) comprises a looped channel along the at least one dispensing opening (15,16),
and wherein
- the transporter (4) is configured for circulation of the sprinkling material through the looped channel (5).
- and wherein the looped channel comprises two parallel channels (6,7), wherein the two parallel channels (6,7) are arranged directly next to each other and connected by U-turns at their ends (8,9), wherein the U-turns are formed by an opening between the two channels through which sprinkling material can travel;
wherein
the transporter (4) comprises a pair of open helix conveyors, arranged in the channels (6,7).

2. Sifter for sprinkling material according to claim 1, comprising a roller (13), arranged under the dispensing opening (15,16), for delivering the sprinkling material to dough (12) on an underlaying conveyor (10).

3. Sifter for sprinkling material according to claim 1, wherein the dispensing opening (15,16) is provided with valves (14).

4. Sifter for sprinkling material according to claim 3, wherein the valves (14) comprise movable switches, comprising at least one opening, wherein the switches are placeable between a position wherein the at least one opening is aligned with a dispensing opening (15,16) in the sifter body, and a position wherein the opening is not aligned with the dispensing opening (15,16) in the sifter body (3), and blocks the dispensing opening (15,16).

5. Sifter for sprinkling material according to claim 4, wherein each valve (14) comprises 2 openings (17,18), at a mutual distance that corresponds with a mutual distance between the openings of the looped channel of the sifter body (3), for opening or closing two openings simultaneously.

6. Sifter according to claim 4 or 5, wherein the valve (14) has an arcuate shape, that follows the shape of a roller that is arranged below the switch.

7. Sifter according to any of claims claim 4-6, wherein each valve (14) is provided with an actuator, for moving the valve (14) between the position wherein the at least one opening is aligned with a dispensing opening (15,16) in the sifter body (3), and the position wherein the opening is not aligned with the dispensing opening (15,16) in the sifter body (3), and blocks the dispensing opening (15,16).

8. Sifter for sprinkling material according to any of the preceding claims,
wherein the reservoir (2) is placed at an outmost position of the sifter body.

9. Sifter for sprinkling material according to any of the preceding claims,
wherein the reservoir (2) is outside a region of the body that comprises the dispensing opening (15,16).

10. Sifter for sprinkling material according any of the preceding claims, arranged on top of a conveyor (10) for dough (12), wherein the reservoir (2) is positioned besides the conveyor (10) for the dough (12).

## Patentansprüche

1. Sieb für Streugut, umfassend:
- mindestens einen Vorratsbehälter (2) für Streugut;
- einen Siebkörper (3), der mindestens eine Ausgabeöffnung (15, 16) für das Streugut umfasst;
- eine Transporteinrichtung (4) zum Transportieren des Streuguts von dem mindestens einen Vorratsbehälter zu dem Siebkörper (3);
wobei
- der Siebkörper (3) einen schleifenförmigen Kanal entlang der mindestens einen Ausgabeöffnung (15, 16) umfasst,
und wobei
- die Transporteinrichtung (4) zur Zirkulation des Streuguts durch den schleifenförmigen Kanal (5) konfiguriert ist,
- und wobei der schleifenförmige Kanal zwei parallele Kanäle (6, 7) umfasst, wobei die zwei parallelen Kanäle (6, 7) unmittelbar nebeneinander angeordnet und an ihren Enden (8, 9) durch U-Bögen verbunden sind, wobei die U-Bögen durch eine Öffnung zwischen den zwei Kanälen gebildet werden, durch die Streugut laufen kann;
wobei
- die Transporteinrichtung einem Paar Schnecken- oder Wendelförderer umfasst, die in den Kanälen (6, 7) angeordnet sind.

2. Sieb für Streugut nach einem der vorhergehenden Ansprüche, umfassend eine Walze (13), die unter der Ausgabeöffnung (15, 16) angeordnet ist, zum Zuführen des Streuguts zu Teig (12) auf einem darunter liegenden Förderer (10).

3. Sieb für Streugut nach Anspruch 3, wobei die Ausgabeöffnung (15, 16) mit Ventilen (14) versehen ist.

4. Sieb für Streugut nach Anspruch 4, wobei die Ventile (14) bewegbare Weichen umfassen, die mindestens eine Öffnung umfassen, wobei die Weichen zwischen einer Position, in der die mindestens eine Öffnung mit einer Ausgabeöffnung (15, 16) im Siebkörper ausgerichtet ist, und einer Position, in der die Öffnung nicht mit der Ausgabeöffnung (15, 16) im Siebkörper (3) ausgerichtet ist und die Ausgabeöffnung (15, 16) blockiert, platzierbar sind.

5. Sieb für Streugut nach Anspruch 4, wobei jedes Ventil (14) 2 Öffnungen (17, 18) in einem gegenseitigen Abstand umfasst, der einem gegenseitigen Abstand zwischen den Öffnungen des schleifenförmigen Kanals des Siebkörpers (3) entspricht, zum Öffnen oder Schließen von zwei Öffnungen gleichzeitig.

6. Sieb nach Anspruch 4 oder 5, wobei das Ventil (14) eine Bogenform aufweist, die der Form einer Walze folgt, die unterhalb der Weiche angeordnet ist.

7. Sieb nach einem der Ansprüche 4 bis 6, wobei jedes Ventil (14) mit einem Stellglied versehen ist zum Bewegen des Ventils (14) zwischen der Position, in der die mindestens eine Öffnung mit einer Ausgabeöffnung (15, 16) im Siebkörper (3) ausgerichtet ist, und der Position, in der die Öffnung nicht mit der Ausgabeöffnung (15, 16) im Siebkörper (3) ausgerichtet ist und die Ausgabeöffnung (15, 16) blockiert.

8. Sieb für Streugut nach einem der vorhergehenden Ansprüche, wobei der Vorratsbehälter (2) an einer äußersten Position des Siebkörpers platziert ist.

9. Sieb für Streugut nach einem der vorhergehenden Ansprüche, wobei sich der Vorratsbehälter (2) außerhalb eines Bereichs des Körpers befindet, der die Ausgabeöffnung (15, 16) umfasst.

10. Sieb für Streugut nach einem der vorhergehenden Ansprüche, das konfiguriert ist, um auf der Oberseite eines Förderers (10) für Teig (12) angeordnet zu werden, wobei der Vorratsbehälter (2) neben dem Förderer (10) für den Teig (12) positioniert ist.

## Revendications

1. Tamis pour matière à saupoudrer, comprenant :
- au moins un réservoir (2) pour matière à saupoudrer ;
- un corps de tamis (3), comprenant au moins une ouverture de distribution (15, 16) pour la matière à saupoudrer ;
- un transporteur (4), pour transporter la matière à saupoudrer de l'au moins un réservoir au corps de tamis (3) ;
dans lequel
- le corps de tamis (3) comprend un canal en boucle le long de l'au moins une ouverture de distribution (15, 16),
et dans lequel
- le transporteur (4) est conçu pour la circulation de la matière à saupoudrer à travers le canal en boucle (5),
et dans lequel
le canal en boucle comprend deux canaux parallèles (6, 7), dans lequel les deux canaux parallèles (6, 7) sont disposés directement l'un à côté de l'autre et reliés par des coudes en U à leurs extrémités (8, 9), dans lequel les coudes en U sont formés entre les deux canaux par une ouverture que peut traverser la matière à saupoudrer,
- dans lequel le transporteur (4) comprend une paire de transporteurs à vis ou à hélice, agencés dans les canaux (6, 7).

2. Tamis pour matière à saupoudrer selon l'une quelconque des revendications précédentes, comprenant un rouleau (13), agencé sous l'ouverture de distribution (15, 16), pour intégrer la matière à saupoudrer à de la pâte (12) sur un convoyeur sous-jacent (10).

3. Tamis pour matière à saupoudrer selon la revendication 1, dans lequel l'ouverture de distribution (15, 16) comporte des soupapes (14).

4. Tamis pour matière à saupoudrer selon la revendication 3, dans lequel les soupapes (14) comprennent des interrupteurs mobiles comprenant au moins une ouverture, dans lequel les interrupteurs peuvent être placés entre une position dans laquelle l'au moins une ouverture est alignée avec une ouverture de distribution (15, 16) dans le corps de tamis et une position dans laquelle l'ouverture n'est pas alignée avec l'ouverture de distribution (15, 16) dans le corps de tamis (3) et bloque l'ouverture de distribution (15, 16).

5. Tamis pour matière à saupoudrer selon la revendication 4, dans lequel chaque soupape (14) comprend 2 ouvertures (17, 18), à une distance mutuelle qui correspond à une distance mutuelle entre les ouvertures du canal en boucle du corps de tamis (3) pour ouvrir ou fermer simultanément deux ouvertures.

6. Tamis selon la revendication 4 ou 5, dans lequel la soupape (14) a une forme arquée qui suit la forme d'un rouleau agencé sous l'interrupteur.

7. Tamis selon l'une quelconque des revendications 4 à 6, dans lequel chaque soupape (14) comporte un actionneur, permettant de déplacer la soupape (14) entre la position dans laquelle l'au moins une ouverture est alignée avec une ouverture de distribution (15, 16) dans le corps de tamis (3) et la position dans laquelle l'ouverture n'est pas alignée avec l'ouverture de distribution (15, 16) dans le corps de tamis (3) et bloque l'ouverture de distribution (15, 16).

8. Tamis pour matière à saupoudrer selon l'une quelconque des revendications précédentes, dans lequel le réservoir (2) est placé à une position la plus à l'extérieur du corps de tamis.

9. Tamis pour matière à saupoudrer selon l'une quelconque des revendications précédentes, dans lequel le réservoir (2) est à l'extérieur d'une zone du corps qui comprend l'ouverture de distribution (15, 16).

10. Tamis pour matière à saupoudrer selon l'une quelconque des revendications précédentes, conçu pour être agencé au-dessus d'un convoyeur (10) pour pâte (12), dans lequel le réservoir (2) est positionné à côté du convoyeur (10) pour la pâte (12).
